Europäisches Patentamt

European Patent Office

Office européen des brevets

(19)

(11) **EP 0 605 274 B1**

(12) **FASCICULE DE BREVET EUROPEEN**

(45) Date de publication et mention
de la délivrance du brevet:
**06.05.1999 Bulletin 1999/18**

(51) Int. Cl.$^6$: **C01G 25/00**, C01G 25/02, B01J 23/10

(21) Numéro de dépôt: **93403030.5**

(22) Date de dépôt: **15.12.1993**

(54) **Composition à base d'un oxyde mixte de cérium et de zirconium, préparation et utilisation**

Zusammensetzung auf der Basis eines Cerium- und Zirkoniummischoxids, Herstellung und Verwendung

Composition based on a mixed oxide of cerium and zirconium, preparation and use

(84) Etats contractants désignés:
**AT BE CH DE DK ES FR GB GR IE IT LI LU NL PT SE**

(30) Priorité: **21.12.1992 FR 9215376**

(43) Date de publication de la demande:
**06.07.1994 Bulletin 1994/27**

(73) Titulaire: **RHODIA CHIMIE
92408 Courbevoie Cédex (FR)**

(72) Inventeurs:
• **Chopin, Thierry
F-93200 Saint-Denis (FR)**
• **Touret, Olivier
F-17000 La Rochelle (FR)**

(74) Mandataire:
**Dubruc, Philippe et al
RHODIA SERVICES
Direction de la Propriété Industrielle
25, quai Paul Doumer
92408 Courbevoie Cédex (FR)**

(56) Documents cités:
**DE-A- 3 408 096          FR-A- 2 590 887**

• **DATABASE WPI Derwent Publications Ltd., London, GB; AN 92-118001 & JP-A-4 055 315 (DAINICHISEIKA COLOR CHEM) & PATENT ABSTRACTS OF JAPAN vol. 16, no. 249 (C-0948) & JP-A-40 055 315 (DAINICHISEIKA COLOR & CHEM)**
• **DATABASE WPI Derwent Publications Ltd., London, GB; AN 91-205196 & JP-A-3 131 343 (NISSAN MOTOR KK) & PATENT ABSTRACTS OF JAPAN vol. 15, no. 341 (C-0863) & JP-A-31 031 343 (NISSAN MOTOR CO LTD)**

## Description

La présente invention concerne, à titre de produits industriels nouveaux et utiles, de nouvelles compositions à base d'oxydes mixtes de cérium et de zirconium, et éventuellement d'yttrium, présentant notamment des surfaces spécifiques améliorées, en particulier des surfaces spécifiques élevées et stables thermiquement.

Elle concerne également un procédé pour l'obtention de telles compositions, ainsi que l'utilisation de ces dernières, notamment dans le domaine de la catalyse, en tant que catalyseurs mêmes et/ou supports de catalyseurs.

L'oxyde de cérium et l'oxyde de zirconium apparaissent aujourd'hui comme deux constituants particulièrement importants et intéressants; ainsi, à titre d'exemple, ils sont tous deux de plus en plus fréquemment rencontrés, seuls ou conjointement, dans de nombreuses compositions pour catalyseurs dits multifonctionnels, notamment les catalyseurs destinés au traitement des gaz d'échappement des moteurs à combustion interne. Par multifonctionnnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). On notera que de tels catalyseurs, tant au niveau de leurs compositions que de leur principe de fonctionnement, ont déjà été largement décrits dans la littérature et ont fait l'objet de nombreux brevets et/ou demandes de brevets.

Même si les raisons scientifiques qui ont été avancées à ce jour pour tenter d'expliquer ce fait apparaissent encore quelque peu incertaines, voire parfois contradictoires, il semble pourtant maintenant bien établi que les catalyseurs industriels "trois voies" qui contiennent à la fois de l'oxyde de cérium et de l'oxyde de zirconium sont globalement plus efficaces que les catalyseurs qui sont soit totalement exempts des deux oxydes précités, soit exempts de seulement l'un d'entre eux.

Dans des catalyseurs tels que ci-dessus, l'oxyde de cérium et l'oxyde de zirconium, qui peuvent d'ailleurs exercer une fonction catalytique propre et/ou une fonction de simple support pour d'autres éléments catalytiques tels que platine, rhodium et autres métaux précieux, sont généralement présents sous une forme non combinée, c'est à dire que l'on retrouve ces deux constituants, au niveau du catalyseur final, sous la forme d'un simple mélange physique de particules d'oxydes bien individualisées. Ceci résulte en partie du fait que ces catalyseurs à base d'oxyde de cérium et d'oxyde zirconium sont le plus souvent obtenus par mélange intime des poudres d'oxydes correspondants, ou bien encore de précurseurs décomposables thermiquement en ces oxydes.

Or, pour diverses raisons, il se dégage aujourd'hui dans l'état de l'art une tendance de plus en plus marquée à essayer d'introduire et de mettre en oeuvre dans la composition du catalyseur les éléments cérium et zirconium non plus sous une forme séparée et non combinée, mais au contraire directement sous la forme d'un véritable oxyde mixte de type solution solide $CeO_2$-$ZrO_2$.

Toutefois, dans pareille situation, et il s'agit là d'une exigence tout à fait classique dans le domaine de la catalyse, il devient alors nécessaire de pouvoir disposer d'un oxyde mixte présentant une surface spécifique qui soit la plus élevée possible et aussi, de préférence, stable thermiquement. En effet, compte tenu du fait que l'efficacité d'un catalyseur est généralement d'autant plus grande que la surface de contact entre le catalyseur (phase catalytiquement active) et les réactifs est élevée, il convient que le catalyseur, tant à l'état neuf qu'après un emploi prolongé à plus ou moins hautes températures, soit maintenu dans un état le plus divisé possible, c'est à dire que les particules solides, ou cristallites, qui le constituent restent aussi petites et aussi individualisées que possible, ce qui ne peut être obtenu qu'à partir d'oxydes mixtes présentant des surfaces spécifiques élevées et relativement stables en températures.

On notera à ce niveau de l'exposé que certains oxydes mixtes de type solution solide dans le système $CeO_2$-$ZrO_2$ ont déja été décrits dans la littérature; toutefois leur préparation nécessite généralement une étape de calcination à relativement haute température pour obtenir une phase cubique unique, comme cela ressort par exemple de la publication de E. TANI, M. YOSHIMURA et S. SOMIYA intitulée "Revised Phase Diagram of the System $ZrO_2$-$CeO_2$ below 1400°C" et parue dans J. Am. Ceram. Soc., 1983, vol 66 [7], pp 506-510. Le diagramme de phase donné dans cette publication montre ainsi que pour obtenir une phase stable cristallisant dans le système cubique, il est nécessaire de procéder à des calcinations et/ou à des recuits à des températures au moins supérieures à 1000°C, ce qui est bien entendu tout à fait incompatible avec l'obtention d'un oxyde mixte de haute surface spécifique. A de telles températures de calcination, où se forme certes la solution solide désirée, la surface spécifique du produit obtenu n'excède en effet pas 10 $m^2/g$, et est même généralement inférieure à 5 $m^2/g$. En d'autres termes, les oxydes mixtes décrits dans l'art antérieur ne sont donc pas susceptibles de convenir pour des applications en catalyse.

La demande de brevet japonais 55315/1992 décrit une préparation d'une composition à base d'oxydes de cérium et de zirconium. Le procédé utilisé est une précipitation par addition d'un agent alcalin à une solution de sels de cérium et de zirconium. Le procédé ne permet pas d'obtenir des compositions à la fois sous forme de solution solide et à surface élevée.

DE-A-3408096 décrit la préparation de zircone frittée sous forme monoclinique et comprenant du cérium comme stabilisant.

FR-A-2590887 concerne aussi une zircone monoclinique stabilisée avec de l'oxyde de cérium et obtenue notamment par un procédé de coprécipitation par addition d'un composé basique à une solution d'un précurseur de zirconium.

La présente invention se propose de résoudre le problème ci-dessus.

Plus précisément encore, la présente invention vise à proposer des oxydes mixtes de type solution solide dans le système CeO2-ZrO2 qui présentent une grande surface spécifique, et ceci sur une large plage de compositions, en particulier aux teneurs élevées en zirconium.

Elle vise également à proposer des oxydes mixtes tels que ci-dessus qui conservent une surface spécifique importante même après des calcinations à des températures élevées.

Elle vise enfin à proposer un procédé de synthèse permettant d'accéder de manière simple, économique et reproductible, aux nouveaux oxydes mixtes selon l'invention.

Ainsi, à la suite d'importantes recherches menées sur la question, il a été trouvé par la Demanderesse un nouveau procédé convenant à la préparation de solutions solides vraies entre un oxyde de cérium et un oxyde de zirconium (et éventuellement un oxyde d'yttrium), l'une des originalités majeures et essentielles dudit procédé résidant dans le fait qu'il permet de mettre en oeuvre des températures de réactions si inhabituellement basses au regard de ce qui est aujourd'hui connu dans le domaine de la synthèse des solutions solides, que les produits auxquels il conduit présentent alors naturellement des surfaces spécifiques suffisamment élevées pour convenir à des applications en catalyse.

Cette découverte est à la base de la présente invention. Dans l'exposé qui suit de la présente invention, on entend par surface spécifique, la surface spécifique B.E.T déterminée par adsorption d'azote conformément a la norme ASTM D 3663-78 établie a partir de la méthode BRUNAUER - EMMETT - TELLER décrite dans le périodique "The Journal of the American Society, 60, 309 (1938)".

Par ailleurs, chaque fois que l'expression oxyde mixte à base de cérium et de zirconium est utilisée, elle doit être entendue comme visant également une composition pouvant contenir en outre de l'yttrium, en solution solide dans l'oxyde de cérium.

Un premier objet de la présente invention réside donc dans de nouvelles compositions à base d'oxydes mixtes de cérium, de zirconium, et éventuellement d'yttrium, lesdites compositions étant caractérisées par le fait qu'elles présentent une surface spécifique d'au moins 80 m2/g.

Un deuxième objet de la présente invention est constitué par un procédé de synthèse permettant d'accéder à de telles compositions, ledit procédé étant caractérisé par le fait qu'il comprend les étapes essentielles suivantes :

(i) on prépare tout d'abord un mélange en solution aqueuse contenant, dans les proportions stoechiométriques requises, des composés solubles de cérium et de zirconium, et éventuellement d'yttrium,

(ii) on chauffe ensuite ledit mélange,

(iii) puis on récupère le produit réactionnel ainsi obtenu,

(iv) et enfin, éventuellement, on calcine le produit ainsi récupéré,

ce par quoi l'on obtient une composition finale à base d'oxydes mixtes conforme à l'invention.

Grâce au procédé selon l'invention, on peut déja obtenir des phases pures de type oxydes mixtes à des températures de synthèse aussi basses qu'environ 100°C. Les phases ainsi formées se révèlent clairement au moyen d'analyses diffractométriques aux rayons X conduites sur les produits par la suite calcinés à environ 400°C. L'étape de calcination permet donc essentiellement de developper la cristallinité des solutions solides et/ou d'ajuster leur surface spécifique à une valeur finale désirée pour une application donnée.

Mais d'autres caractéristiques, aspects et avantages de l'invention apparaitront encore plus complètement à la lecture de la description qui va suivre, ainsi que des divers exemples concrêts destinés à l'illustrer.

Les compositions selon l'invention se caractérisent donc avant tout par leurs surfaces spécifiques extrêmement élevées, à savoir supérieures à 80 m2/g.

Avantageusement, les compositions selon l'invention présentent une surface spécifique d'au moins 100 m2/g, de préférence encore d'au moins 140°C m2/g, et encore plus préférentiellement d'au moins 150 m2/g.

En outre, selon une autre caractéristique des compositions selon l'invention, lorsque l'on soumet ces dernières à des températures de calcination relativement élevées, comme cela peut être le cas par exemple au cours de leur utilisation dans le domaine de la catalyse, notamment dans des pôts d'échappement, elles continuent encore à présenter une surface spécifique tout à fait convenable; ainsi, portées à 800°C, les compositions selon l'invention conservent une surface spécifique qui est d'au moins 30 m2/g, de préférence d'au moins 40 m2/g, et encore plus préférentiellement d'au moins 50 m2/g, et lorsque ces compositions sont portées à 900°C, lesdites surfaces sont conservées à des valeurs d'au moins 20 m2/g, de préférence d'au moins 30 m2/g.

En d'autres termes, les compositions selon l'invention présentent, au niveau de leurs surfaces spécifiques, une très bonne stabilité thermique.

La présence des éléments cérium et zirconium (et éventuellement yttrium) au sein des compositions selon l'invention peut être mise en évidence par de simples analyses chimiques, alors que les analyses classiques en diffraction X indiquent la forme sous laquelle cette présence existe.

Ainsi, comme indiqué précédemment dans la description, les éléments susmentionnés sont présents dans les compositions selon l'invention sous une forme combinée de type essentiellement, et de préférence totalement, solutions solides ou oxydes mixtes. Les spectres en diffraction X de ces compositions ne révèlent en effet, au sein de ces dernières, l'existence que d'une seule phase identifiable (abscense de phase secondaire parasite détectable) et qui correspond en fait à celle d'un oxyde cérique cristallisé dans le système cubique et dont les paramètres de mailles sont plus ou moins décalés par rapport à un oxyde cérique pur, traduisant ainsi l'incorporation du zirconium (éventuellement de l'yttrium) dans le réseau cristallin de l'oxyde de cérium, et donc l'obtention d'une solution solide vraie.

Les oxydes mixtes monophasiques selon l'invention répondent globalement à la formule générale $Ce_x Zr_{1-x} O_2$ dans laquelle x peut être compris entre 0,4 et 1, cette dernière valeur étant exclue. Avantageusement, x peut être supérieur à 0,5.

Plus particulièrement x pourra être compris entre 0,4 et 0,9 et encore plus particulièrement entre 0,5 et 0,9.

On voit donc que les solutions solides à hautes surfaces spécifiques conformes à l'invention peuvent varier dans une gamme très large de composition. La teneur limite supérieure en zirconium dans la composition n'est en fait imposée que par la seule limite de solubilité de cette espèce dans l'oxyde de cérium.

Dans tous les cas, et même en particulier aux concentrations importantes en zirconium (notamment supérieures à 10% atomique), les compositions selon l'invention, outre le fait d'avoir des surfaces spécifiques très élevées et stables, continuent à se présenter sous une forme parfaitement monophasique et du type CeO2 cubique.

Dans le but, enfin, d'illustrer concrètement la signification de la formule donnée ci-avant, on peut noter ici qu'à une composition d'oxyde mixte conforme à l'invention contenant par exemple 30 % atomique de zirconium en solution solide dans l'oxyde de cérium, correspondra alors globalement la formule $Ce_{0,7} Zr_{0,3} O_2$.

Le procédé de synthèse des compositions selon l'invention va maintenant être développé plus en détails.

Comme indiqué précédemment, la première étape du procédé selon l'invention consiste donc à préparer un mélange, en phase aqueuse, contenant au moins un composé soluble de cérium et au moins un composé soluble de zirconium et, éventuellement, au moins un composé soluble de l'yttrium. Le mélange peut être indifféremment obtenu soit à partir de composés initialement à l'état solide que l'on introduira par la suite dans un pied de cuve d'eau, soit encore directement à partir de solutions de ces composés puis mélange, dans un ordre quelconque, desdites solutions.

A titre de composés solubles dans l'eau du cérium, on peut citer notamment les sels de cérium IV tels que nitrates ou nitrates céri-ammoniacal par exemple, qui conviennent ici particulièrement bien. De préférence, on utilise du nitrate cérique.

La solution de sels de cérium IV peut contenir sans inconvénient du cérium à l'état céreux mais il est souhaitable qu'elle contienne au moins 85% de cérium IV.

Une solution aqueuse de nitrate cérique peut par exemple être obtenue par réaction de l'acide nitrique sur un oxyde cérique hydraté préparé d'une manière classique par réaction d'une solution d'un sel céreux, par exemple le carbonate céreux, et d'une solution d'ammoniaque en présence d'eau oxygénée. On peut également, de préférence, utiliser une solution de nitrate cérique obtenue selon le procédé d'oxydation électrolytique d'une solution de nitrate céreux tel que décrit dans le document FR-A- 2 570 087, et qui constitue ici une matière première de choix.

On notera ici que la solution aqueuse de sels de cérium IV peut présenter une certaine acidité libre initiale, par exemple une normalité variant entre 0,1 et 4 N.

Selon la présente invention, il est autant possible de mettre en oeuvre une solution initiale de sels de cérium IV présentant effectivement une certaine acidité libre comme mentionné ci-dessus, qu'une solution qui aura été préalablement neutralisée de façon plus ou moins poussée par ajout d'une base, telle que par exemple une solution d'ammoniaque ou encore d'hydroxydes d'alcalins (sodium, potassium,...), mais de préférence une solution d'ammoniaque, de manière à limiter cette acidité. On peut alors, dans ce dernier cas, définir de manière pratique un taux de neutralisation (r) de la solution initiale de cérium par l'équation suivante :

$$r = \frac{n3 - n2}{n1}$$

dans laquelle n1 représente le nombre total de moles de Ce IV présentes dans la solution après neutralisation; n2 représente le nombre de moles d'ions $OH^-$ effectivement nécessaires pour neutraliser l'acidité libre initiale apportée par la solution aqueuse de sel de cérium IV; et n3 représente le nombre total de moles d'ions $OH^-$ apportées par l'addition de la base. Lorsque la variante "neutralisation" est mise en oeuvre, on utilise dans tous les cas une quantité de base qui doit être impérativement inférieure à la quantité de base qui serait nécessaire pour obtenir la précipitation totale de l'espèce hydroxyde $Ce(OH)_4$ (r=4). Dans la pratique, on se limite ainsi à des taux de neutralisation n'excédant pas 1, et de préférence encore n'excédant pas 0,5.

A titre de composés solubles du zirconium utilisables dans le procédé de l'invention, on peut par exemple citer les sels du type sulfate de zirconium, nitrate de zirconyle ou bien encore chlorure de zirconyle. On notera que le nitrate de zirconyle convient particulièrement bien.

Enfin, lorsque l'on désire obtenir une composition finale contenant également de l'yttrium en solution solide, on peut mettre en oeuvre des composés solubles de l'yttrium tels que nitrates, acétates ou halogénures, en particulier chlorures, par exemple.

On notera que les composés du cérium, du zirconium et éventuellement de l'yttrium listés ci-dessus et susceptibles d'être mis en oeuvre dans la préparation du mélange initial, ne sont bien entendu donnés qu'à titre illustratif et nullement limitatif.

Les quantités de cérium, de zirconium, et éventuellement d'yttrium, présentes dans le mélange doivent correspondre aux proportions stoëchiométriques requises pour l'obtention de la composition finale désirée.

Le mélange initial étant ainsi obtenu, on procède ensuite, conformément à la deuxième étape du procédé selon l'invention (étape (ii) ), à son chauffage.
La température à laquelle est menée ce traitement thermique, aussi appelé thermohydrolyse, peut être comprise entre 80°C et la température critique du milieu réactionnel. Elle peut être plus particulièrement d'au moins 120°C. A titre d'exemple, cette température peut être comprise entre 80 et 350°C, de préférence entre 90 et 200°C et encore plus particulièrement entre 120 et 200°C.

Ce traitement peut être conduit, selon les conditions de températures retenues, soit sous pression normale atmosphérique, soit sous pression telle que par exemple la pression de vapeur saturante correspondant à la température du traitement thermique. Lorsque la température de traitement est choisie supérieure à la température de reflux du mélange réactionnel (c'est à dire généralement supérieure à 100°C), par exemple choisie entre 150 et 350°C, on conduit alors l'opération en introduisant le mélange aqueux contenant les espèces précitées dans une enceinte clôse (réacteur fermé plus couramment appelé autoclave), la pression nécessaire ne résultant alors que du seul chauffage du milieu réactionnel (pression autogène). Dans les conditions de températures données ci-dessus, et en milieux aqueux, on peut ainsi préciser, à titre illustratif, que la pression dans le réacteur fermé varie entre une valeur supérieure à 1 Bar ($10^5$ Pa) et 165 Bar (165. $10^5$ Pa), de préférence entre 5 Bar (5. $10^5$ Pa) et 165 Bar (165. $10^5$ Pa). Il est bien entendu également possible d'exercer une pression extérieure qui s'ajoute alors à celle consécutive au chauffage.

Durant le traitement thermique, le pH du milieu réactionnel varie généralement entre environ 0 et 2 au début du traitement et environ 0 et 3 à la fin de celui-ci. Le chauffage peut être conduit soit sous atmosphère d'air, soit sous atmosphère de gaz inerte, de préférence l'azote.
La durée du traitement n'est pas critique, et peut ainsi varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.
A l'issue de l'étape (ii) de chauffage, on récupère un produit solide qui peut être séparé de son milieu par toute technique classique de séparation solide-liquide telle que par exemple filtration, décantation, essorage ou centrifugation .

Si nécessaire, pour compléter la précipitation du produit, on peut introduire, directement après l'étape de chauffage, une base telle que par exemple une solution d'ammoniaque, dans le milieu de précipitation. Cette étape permet ainsi d'augmenter les rendements de récupération en l'espèce obtenue.

On notera qu'il est bien entendu possible de répéter une ou plusieurs fois, à l'identique ou non, une étape de chauffage/précipitation telle que ci-dessus définie, en mettant alors en oeuvre par exemple des cycles de traitements thermiques.

Le produit tel que récupéré peut ensuite être soumis à des lavages, qui sont alors opérés de préférence avec une solution d'ammoniaque. Pour éliminer l'eau résiduelle, le produit lavé peut enfin, éventuellement, être séché, par exemple à l'air, et ceci à une température qui peut varier entre 80 et 300°C, de préférence entre 100 et 150°C, le séchage étant poursuivi jusqu'à l'obtention d'un poids constant.

Dans une dernière étape du procédé selon l'invention (étape (iv)), qui n'est pas obligatoire, le produit récupéré, après éventuellement lavage et/ou séchage, peut ensuite être calciné. Cette calcination permet de développer la cristallinité de la phase solution solide formée, et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte n'est bien évidemment pas exclue.

Comme souligné ci-avant dans la description, il est possible, grâce au procédé selon l'invention, d'obtenir des solutions solides en mettant en oeuvre des températures de synthèse exceptionnellement basses, de l'ordre de 100°C, ces solutions solides présentant alors les surfaces spécifiques les plus élevées.
Aussi, dans la pratique, lorsqu'une étape finale de calcination est mise en oeuvre, on limite généralement la température de calcination à un intervalle de valeurs comprises entre 200 et 1000°C, de préférence comprises entre 400 et 800°C.

Même après des calcinations à températures élevées, c'est à dire en particulier des températures supérieures à celles qui sont strictement nécessaires pour mettre clairement en évidence par rayons X la formation de la solution solide désirée, les compositions selon l'invention conservent des surfaces spécifiques tout à fait acceptables.

Ainsi, les surfaces spécifiques remarquablement élevées des nouvelles compositions selon l'invention font que ces dernières peuvent trouver de très nombreuses applications. Elles sont ainsi particulièrement bien adaptées pour être utilisées dans le domaine de la catalyse, comme catalyseurs et/ou comme supports de catalyseurs. Elles peuvent être employées comme catalyseurs ou supports de catalyseurs pour effectuer diverses réactions telles que, par exemple, la déshydratation, l'hydrosulfuration, l'hydrodénitrification, la désulfuration, l'hydrodésulfuration, la déshydrohalogénation, le réformage, le réformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

Toutefois, une des applications les plus importantes des compositions selon l'invention réside bien entendu, comme déja souligné ci-avant dans la description, dans l'utilisation de ces dernières comme constituants pour catalyseurs destinés au traitement des gaz d'échappement des moteurs à combustion interne. Ainsi, dans cette application, la composition selon l'invention est mélangée généralement à de l'alumine avant ou après imprégnation par des éléments catalytiquement actifs, tels que des métaux précieux, ce mélange étant ensuite soit mis en forme pour former des catalyseurs, par exemple sous forme de billes, soit utilisé pour former un revêtement d'un corp réfractaire tel qu'un monolithe en céramique ou métallique, ce revêtement étant bien connu dans l'état de l'art sous le terme de "wash-coat".

Les exemples qui suivent illustrent l'invention sans toutefois la limiter.

Exemple 1

Cet exemple illustre l'invention dans le cadre de la préparation d'un oxyde mixte de cérium et de zirconium de formule $Ce_{0,8} Zr_{0,2} O_2$.

Dans les proportions stoechiométriques requises pour l'obtention de l'oxyde mixte ci-dessus, on mélange une première solution de nitrate de zirconyle $ZrO(NO_3)_2$, $2H_2O$ avec une deuxième solution de nitrate cérique dont l'acidité libre initiale a été préalablement neutralisée par ajout d'ammoniaque jusqu'à l'obtention d'un taux de neutralisation r (tel que défini ci-avant dans la description) égal à 0,5.

Le mélange ainsi obtenu est ensuite placé dans un autoclave (autoclave PARR) pour y subir un traitement thermique à 160°C pendant 4 heures.

A l'issue de ce traitement, le produit obtenu est récupéré par filtration, puis lavé par une solution d'ammoniaque 2 M, et enfin séché pendant une nuit dans une étuve à 80 °C.

On soumet enfin le produit à une étape de calcination sous air à 400°C pendant 6 heures.

La surface spécifique BET du produit ainsi calciné est alors de 153 m2/g.

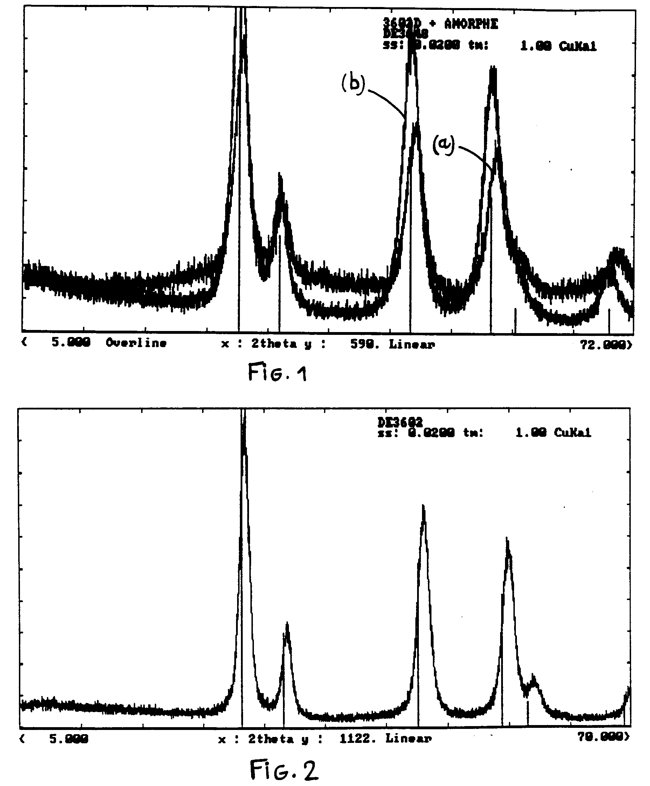

Le diagramme de diffraction X de ce produit est donné à la figure 1, courbe a.

Par rapport au spectre de diffraction X d'un oxyde cérique pur préparé dans les mêmes conditions que ci-dessus mais en l'absence de zirconium (Figure 1, courbe b), on observe pour le produit de l'invention un décalage net de la position des pics de diffraction vèrs les grands angles, ce qui traduit l'incorporation du zirconium dans le réseau cristallin de l'oxyde de cérium. En outre, seuls les pics correspondant à la phase cubique de type $CeO_2$ peuvent être décelés sur le diagramme de diffraction X du produit, sans que l'on puisse détecter de phase secondaire parasite.

Ce point est d'ailleurs confirmé lorsque l'on procède sur le produit de l'invention à une deuxième calcination opérée cette fois à 700°C pendant 2 heures. Le spectre de diffraction X du produit ainsi obtenu (Figure 2) ne montre en effet toujours qu'une phase cristalline unique. De plus, dans ces conditions, le degré de cristallisation du produit est suffisant pour que l'on puisse mesurer le paramètre de maille de la phase cubique de type $CeO_2$ obtenue. La valeur mesurée de ce paramètre de maille est alors de 5,36 A (0,536 nm). Elle est en très bon accord avec la valeur qui peut être estimée à partir de la publication de E. TANI *et al* susmentionnée pour un oxyde mixte de composition $Ce_{0,8} Zr_{0,2} O_2$ (cf. "évaluation de l'évolution du paramètre de maille dans le système CeO2-ZrO2 en fonction du taux de substitution des atomes de cérium par ceux de zirconium") et qui est alors également de 5,36 A (0,536 nm).

Ces résultats démontrent donc clairement que, selon la présente invention, on est en présence au plus dès 400°C d'une phase de type solution solide $Ce_{0,8} Zr_{0,2} O_2$ qui présente alors une surface spécifique BET de 153 m2/g.

Exemple 2

Cet exemple illustre l'invention dans le cadre de la préparation d'un oxyde mixte de cérium, de zirconium et d'yttrium de formule $Ce_{0,65} Zr_{0,30} Y_{0,05}O_2$.

Dans les proportions stoechiométriques requises pour l'obtention de l'oxyde mixte ci-dessus, on mélange sous agitation (a) une solution de nitrate cérique présentant une acidité libre de 0,62 N, (b) une solution de nitrate de zirconyle et (c) une solution de nitrate d'yttrium.

Le mélange est ensuite traité thermiquement à 150°C pendant 4 heures dans un autoclave, et ceci sous agitation mécanique constante du milieu.

A l'issue de ce traitement, on introduit dans la suspension obtenue une solution d'ammoniaque de manière à porter le pH à 9,5, le tout étant ensuite agité pendant 30 minutes pour homogénéisation.

On récupère alors par filtration un produit qui est ensuite essoré puis remis en suspension dans de l'eau. Cette suspension est alors chauffée à 100°C pendant 1 heure.

Le produit est à nouveau filtré puis séché dans une étuve à 120°C.

Le produit séché est enfin calciné sous air à trois températures différentes pendant 6 heures, à savoir 400°C, 800°C et 900°C; les surfaces spécifiques des produits obtenus sont alors, et respectivement, de 157 m2/g, 53 m2/g et 39 m2/g.

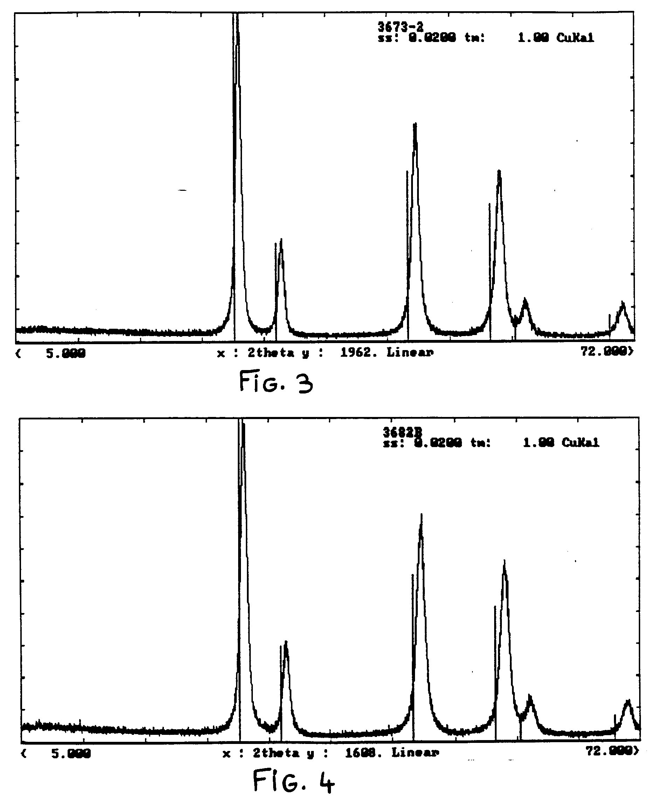

Le diagramme de diffraction X du produit obtenu après calcination à 800°C pendant 6 heures est donné à la figure 3.
Le paramètre de maille mesuré est alors de 5,33 A (0,533 nm), ce qui correspond à nouveau au paramètre de maille théorique qui peut être estimée à partir de la publication de TANI *et al* susmentionnée.

Exemple 3

Cet exemple illustre l'invention dans le cadre de la préparation d'un oxyde mixte de cérium et de zirconium de formule $Ce_{0,83} Zr_{0,17} O2$.

Dans les proportions stoechiométriques requises pour l'obtention de l'oxyde mixte ci-dessus, on mélange une solution de nitrate de zirconyle avec une solution de nitrate cérique dont l'acidité libre initiale a été préalablement neutralisée par de l'ammoniaque de manière à obtenir un taux de neutralisation r égal à 0.

Le mode opératoire ensuite suivi est alors rigoureusement identique à celui de l'exemple 2.

Les surfaces spécifiques, aux différentes températures de calcination (6 heures), des produits finaux obtenus sont alors les suivantes :

- 400°C : 118 m2/g
- 800°C : 35 m2/g
- 900°C : 26 m2/g

Le produit calciné à 800°C présente une phase solution solide cubique, dont le paramètre de maille mesuré est de 5,38 A (0,538 nm).

Exemple 4

Cet exemple illustre l'invention dans le cadre de la préparation d'un oxyde mixte de formule identique à celle de l'exemple 2 ($Ce_{0,65} Zr_{0,30}Y_{0,05} O_2$), mais en suivant un mode opératoire différent de celui de l'exemple 2 (non mise en oeuvre d'une étape d'autoclavage à 150°C).

Le mélange aqueux préparé à l'exemple 2 subit ici le cycle de traitement thermique (chauffage) suivant :

- premier chauffage à 100°C pendant 2H30
- refroidissement du mélange à 45°C en 60 minutes
- ajout d'ammoniaque de manière à amener le pH du milieu à une valeur comprise entre 9 et 9,5
- deuxième chauffage à 100°C pendant 1 heure
- refroidissement à la température ambiante.

Le produit est ensuite récupéré par filtration puis séché dans une étuve à 120°C.

Les surfaces spécifiques, aux différentes températures de calcination (6 heures), des produits finaux obtenus sont alors les suivantes :

- 400°C : 112 m2/g
- 800°C : 54 m2/g
- 900°C : 33 m2/g

Le produit obtenu après calcination à 800 °C présente une phase solution solide cubique, dont le paramètre de maille mesuré est de 5,33 A (0,533 nm).

Le spectre de diffraction X de ce produit est donné à la figure 4.

Exemple 5

Cet exemple illustre l'invention dans le cadre de la préparation d'un oxyde mixte de formule identique à celle de l'exemple 3 ($Ce_{0,83} Zr_{0,17} O_2$), mais selon un mode opératoire différent (pas de mise en oeuvre d'étape d'autoclavage à 150°C).

Dans les proportions stoechiométriques requises pour l'obtention de l'oxyde mixte désiré, on mélange tout d'abord une solution de nitrate de zirconyle avec une solution de nitrate de cérium présentant une acidité libre de 0,62 N.

Le mélange ainsi préparé est ensuite traité en suivant rigoureusement le mode opératoire donné à l'exemple 4.

Les surfaces spécifiques, aux différentes températures de calcination (6 heures), des produits finaux obtenus sont alors les suivantes :

- 400°C : 151 m2/g
- 800°C : 57 m2/g
- 900°C : 33 m2/g.

Le produit obtenu après calcination à 800°C est une phase solution solide cubique dont le paramètre de maille mesuré est de 5,36 A (0,536 nm).

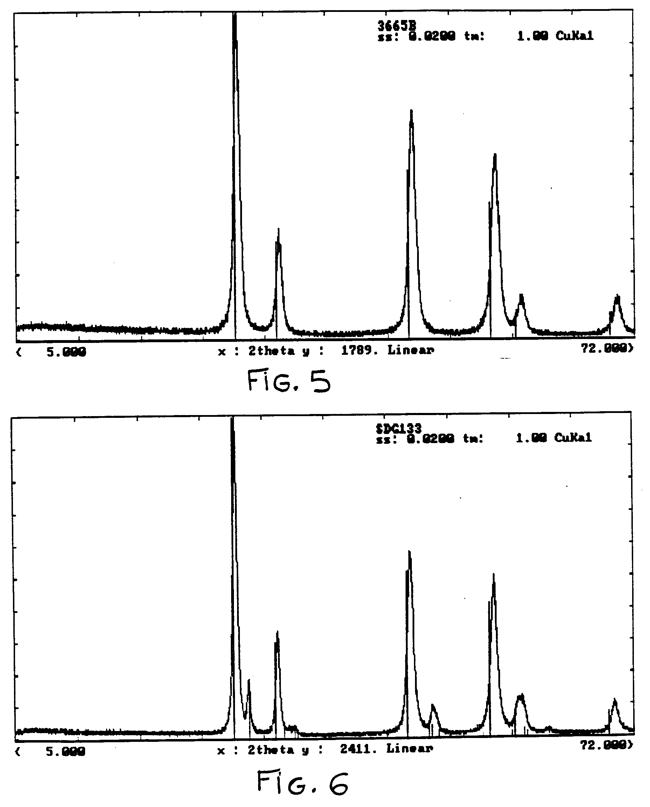

Le spectre de diffraction X de ce produit est donné à la figure 5.

Exemple 6 (comparatif)

Dans cet exemple, on cherche à préparer un oxyde mixte de formule identique à celle de l'exemple 2 ($Ce_{0,65} Zr_{0,30} Y_{0,05} O_2$), mais en mettant en oeuvre une voie classique par imprégnation.

Dans les proportions stoechiométriques requises pour l'obtention d'un oxyde mixte de formule ci-dessus, on imprègne un oxyde cérique CeO2 de qualité commerciale présentant une surface spécifique de 250 m2/g (produit commercialisé par la Société RHONE-POULENC) au moyen d'une première solution de nitrate de zirconyle, le produit ainsi imprégné étant ensuite séché à 110°C sous air, puis on imprègne le produit séché au moyen d'une deuxième solution d'acétate d'yttrium Y(C2H3O2)3, 4H2O, et le produit ainsi imprégné est à nouveau séché sous air à 110°C.
L'oxyde cérique ainsi imprégné de zirconium et d'yttrium est ensuite calciné pendant 6 heures à 900°C.

Le diagramme de diffraction X du produit alors obtenu est donné à la figure 6.

L'analyse du spectre montre l'existence de pics de diffraction attribuables à la présence d'une phase d'oxyde de zirconium ZrO2, démontrant ainsi qu'une phase pure de type oxyde mixte n'a pu être obtenue.

La surface spécifique de ce produit est de 20 m2/g.

**Revendications**

1. Composition à base d'un oxyde mixte de cérium et de zirconium, caractérisée en ce qu'elle se présente sous la forme d'une phase cristalline cubique unique d'oxyde cérique, le zirconium étant en solution solide dans l'oxyde de cérium, et en ce qu'elle présente une surface spécifique après calcination à 800°C pendant 6 heures d'au moins 30 $m^2$/g.

2. Composition selon la revendication 1, caractérisée en ce qu'elle présente une surface spécifique après calcination à 800°C pendant 6 heures d'au moins 40 $m^2$/g.

3. Composition selon la revendication 1 ou 2, caractérisée en ce qu'elle présente une surface spécifique après calcination à 800°C pendant 6 heures d'au moins 50 $m^2$/g.

4. Composition selon l'une des revendications précédentes, caractérisée en ce qu'elle présente une surface spécifique après calcination à 900°C pendant 6 heures d'au moins 20 $m^2$/g.

5. Composition selon la revendication 4, caractérisée en ce qu'elle présente une surface spécifique après calcination a 900°C pendant 6 heures d'au moins 30 $m^2$/g.

6. Composition selon l'une des revendications précédentes, caractérisée en ce qu'elle répond globalement à la formule $Ce_x Zr_{1-x} O_2$ dans laquelle x est un nombre compris entre 0,5 et 1, cette dernière valeur étant exclue, x pouvant être plus particulièrement compris entre 0,5 et 0,9.

7. Composition selon la revendication 6, caractérisée en ce que x est un nombre compris entre 0,5 et 0,8.

8. Composition selon l'une des revendications 6 ou 7, caractérisée en ce que x est compris entre 0,5 et 0,7.

9. Composition selon l'une quelconque des revendications précédentes, caractérisée en ce qu'elle comprend en outre de l'yttrium en solution solide.

10. Procédé de préparation d'une composition telle que définie à l'une quelconque des revendications 1 à 9, caractérisé par le fait qu'il comprend les étapes suivantes :

    (i) on prépare un mélange aqueux contenant des composés solubles de cérium et de zirconium, et éventuellement d'yttrium, dans des quantités correspondant aux proportions stoechiométriques du produit désiré et à l'obtention d'une phase cristalline cubique unique d'oxyde cérique;
    (ii) on effectue ensuite une thermohydrolyse dudit mélange aqueux par chauffage de celui-ci à une température comprise entre 80°C et 350°C,
    (iii) on récupère le produit réactionnel ainsi obtenu,
    (iv) on calcine le produit récupéré à une température comprise entre 200°C et 1000°C.

11. Procédé selon la revendication 10, caractérisé en ce que le composé soluble de cérium est choisi, seul ou en mélange, parmi les nitrates, notamment le nitrate cérique, et les nitrates céri-ammoniacal.

12. Procédé selon la revendication 10 ou 11, caractérisé en ce que l'on utilise une solution de nitrate cérique provenant de l'oxydation électrolytique d'une solution de nitrate céreux.

13. Procédé selon l'une quelconque des revendications 10 à 12, caractérisé en ce que ledit composé soluble de zirconium est choisi, seul ou en mélange, parmi le sulfate de zirconium, le nitrate de zirconyle ou le chlorure de zirconyle.

14. Procédé selon l'une quelconque des revendications 10 à 13, caractérisé en ce que, après ladite étape de chauffage, on rajoute une base dans le milieu de précipitation.

15. Procédé selon l'une quelconque des revendications 10 à 14, caractérisé en ce que le produit réactionnel récupéré est ensuite lavé, de préférence avec une solution d'ammoniaque.

16. Procédé selon l'une quelconque des revendications 10 à 15 caractérisé en ce que le produit réactionnel récupéré, et éventuellement lavé, est séché.

17. Composition précurseur d'une composition selon l'une des revendications 1 à 9, caractérisée en ce qu'elle est à base de cérium et de zirconium et en ce qu'après avoir subi une calcination à une température comprise entre 400°C et 800°C, elle se présente sous la forme d'une phase cristalline cubique unique d'oxyde cérique incorporant le zirconium dans le réseau cristallin de l'oxyde de cérium.

18. Composition précurseur selon la revendication 17, caractérisée en ce qu'après avoir subi une calcination à une température comprise entre 400°C et 800°C, elle répond globalement à la formule $Ce_x Zr_{1-x} O_2$ dans laquelle x est un nombre compris entre 0,5 et 1, cette dernière valeur étant exclue, x pouvant être plus particulièrement compris entre 0,5 et 0,9.

19. Composition précurseur selon la revendication 18, caractérisée en ce que x est compris entre 0,5 et 0,7.

20. Composition précurseur selon l'une des revendications 17 à 19, caractérisée en ce qu'elle comprend de l'yttrium, l'yttrium étant en solution solide après la calcination à une température comprise entre 400°C et 800°C.

21. Procédé de préparation d'une composition précurseur selon l'une des revendications 17 à 20, caractérisé par le fait qu'il comprend les étapes suivantes :

    (i) on prépare un mélange aqueux contenant des composés solubles de cérium et de zirconium, et éventuellement d'yttrium, dans des quantités correspondant aux proportions stoechiométriques du produit désiré et à l'obtention d'une phase cristalline cubique unique d'oxyde cérique;
    (ii) on effectue ensuite une thermohydrolyse dudit mélange aqueux par chauffage de celui-ci à une température comprise entre 80°C et 350°C,
    (iii) on récupère le produit réactionnel ainsi obtenu.

22. Utilisation d'une composition telle que définie à l'une quelconque des revendications 1 à 9 ou 17 à 20 ou obtenue selon un procédé tel que défini à l'une quelconque des revendications 10 à 16 ou 21, pour la fabrication de catalyseurs ou de supports de catalyseurs, notamment destinés au traitement des gaz d'échappement des moteurs à combustion interne.

23. Catalyseur du type comprenant un support poreux et des éléments catalytiquement actifs, caractérisé en ce que ledit support poreux comprend de l'alumine en mélange avec une composition telle que définie a l'une quelconque des revendications 1 à 9 ou obtenue selon le procédé de l'une quelconque des revendications 10 à 16.

24. Catalyseur de type monolithe comprenant une structure réfractaire (support) revêtue par une couche poreuse sur laquelle sont déposés des éléments catalytiquement actifs, caractérisé en ce que ladite couche poreuse comprend de l'alumine en mélange avec une composition telle que définie a l'une quelconque des revendications 1 à 9 ou obtenue selon le procédé de l'une quelconque des revendications 10 à 16

**Claims**

1. A composition based on a mixed oxide of cerium and zirconium, characterized in that it is in the form of a single cubic crystalline phase of ceric oxide, the zirconium being in solid solution in the cerium oxide, and in that it has a specific surface area of at least 30 $m^2/g$ after calcining at 800°C for 6 hours.

2. A composition according to claim 1, characterized in that it has a specific surface area at least 40 $m^2/g$ after calcining at 800°C for 6 hours of.

3. A composition according to claim 1 or claim 2, characterized in that it has a specific surface area of at least 50 $m^2/g$ after calcining at 800°C for 6 hours.

4. A composition according to any one of the preceding claims, characterized in that it has a specific surface area of at least 20 $m^2/g$ after calcining at 900°C for 6 hours.

5. A composition according to claim 4, characterized in that it has a specific surface area of at least 30 $m^2/g$ after calcining at 900°C for 6 hours.

6. A composition according to any one of the preceding claims, characterized in that it has the overall formula $Ce_x Zr_{1-x} O_2$ in which x is a number in the range 0.5 to 1, the latter value being excluded, x more particularly being in the range 0.5 to 0.9.

7. A composition according to claim 6, characterized in that x is a number in the range 0.5 to 0.8.

8. A composition according to claim 6 or claim 7, characterized in that x is in the range 0.5 to 0.7.

9. A composition according to any one of the preceding claims, characterized in that it also comprises yttrium in solid solution.

10. A method for preparing a composition as defined in any one of claims 1 to 9, characterized in that it comprises the following steps:

(i) preparing an aqueous mixture containing soluble compounds of cerium and of zirconium, and optionally of yttrium, in quantities corresponding to the stoichiometric proportions of the desired product and to obtaining a single cubic crystalline ceric oxide phase;
(ii) thermohydrolysing said aqueous mixture by heating it to a temperature in the range 80°C to 350°C;
(iii) recovering the reaction product thus obtained;
(iv) calcining the recovered product at a temperature in the range 200°C to 1000°C.

11. A method according to claim 10, characterized in that the soluble cerium compound is selected, alone or as a mixture, from nitrates, in particular ceric nitrate, and ceric ammonium nitrates.

12. A method according to claim 10 or claim 11, characterized in that a ceric nitrate solution originating from electrolytic oxidation of a cerous nitrate solution is used.

13. A method according to any one of claims 10 to 12, characterized in that said soluble zirconium compound is selected, alone or as a mixture, from zirconium sulphate, zirconyl nitrate or zirconyl nitrate.

14. A method according to any one of claims 10 to 13, characterized in that after said heating step, a base is added to the precipitation medium.

15. A method according to any one of claims 10 to 14, characterized in that the reaction product which is recovered is then washed, preferably with an ammonia solution.

16. A method according to any one of claims 10 to 15, characterized in that the recovered, and optionally washed, reaction product is dried.

17. A precursor composition for a composition according to any one of claims 1 to 9, characterized in that it is based on cerium and zirconium and in that after calcining at a temperature in the range 400°C to 800°C, it is in the form of a single cubic crystalline phase of ceric oxide incorporating zirconium in the crystalline cerium oxide lattice.

18. A precursor composition according to claim 17, characterized in that after calcining at a temperature in the range 400°C to 800°C, it has the overall formula $Ce_xZr_{1-x}O_2$ where x is a number in the range 0.5 to 1, the latter value being excluded, x more particularly being in the range 0.5 to 0.9.

19. A precursor composition according to claim 18, characterized in that x is in the range 0.5 to 0.7.

20. A precursor composition according to any one of claims 17 to 19, characterized in that it comprises yttrium, the yttrium being in solid solution after calcining at a temperature in the range 400°C to 800°C.

21. A method for preparing a precursor composition according to any one of claims 17 to 20, characterized in that it comprises the following steps:

(i) preparing an aqueous mixture containing soluble compounds of cerium and of zirconium, and optionally of yttrium, in quantities corresponding to the stoichiometric proportions of the desired product and to obtaining a single cubic crystalline ceric oxide phase;
(ii) thermohydrolysing said aqueous mixture by heating it to a temperature in the range 80°C to 350°C;
(iii) recovering the reaction product obtained.

22. Use of a composition as defined in any one of claims 1 to 9 or 17 to 20 or obtained by the method defined in any one of claims 10 to 16 or 21, for the production of catalysts or catalyst supports, in particular intended for the treatment of exhaust gas from internal combustion engines.

23. A catalyst of the type comprising a porous support and catalytically active elements, characterized in that said porous support comprises alumina mixed with a composition as defined in any one of claims 1 to 9 or obtained using the method of any one of claims 10 to 16.

24. A monolithic catalyst comprising a refractory structure (support) coated with a porous layer on which catalytically active elements are deposited, characterized in that said porous support comprises alumina mixed with a composition as defined in any one of claims 1 to 9 or obtained using the method of any one of claims 10 to 16.

**Patentansprüche**

1. Zusammensetzung auf der Basis eines Cer- und Zirkonium-Mischoxids, dadurch gekennzeichnet, daß sie in Form einer rein kubisch-kristallinen Phase aus Ceroxid vorliegt, wobei das Zirkonium im Ceroxid in fester Lösung vorliegt, und dadurch, daß sie nach 6 Stunden Glühen (Calcinieren) bei 800°C eine spezifische Oberfläche von 30m$^2$/g aufweist.

2. Zusammensetzung gemäß Anspruch 1, dadurch gekennzeichnet, daß sie nach 6 Stunden Glühen bei 800 °C eine spezifische Oberfläche von wenigstens 40 m$^2$/g aufweist.

3. Zusammensetzung gemäß Anspruch 1 oder 2, dadurch gekennzeichnet, daß sie nach 6 Stunden Glühen bei 800 °C eine spezifische Oberfläche von wenigstens 50 m$^2$/g aufweist.

4. Zusammensetzung gemäß einem der vorhergehenden Ansprüche, dadurch gekennzeichnet, daß sie nach 6 Stunden Glühen bei 900 °C eine spezifische Oberfläche von wenigstens 20 m$^2$/g aufweist.

5. Zusammensetzung gemäß Anspruch 4, dadurch gekennzeichnet, daß sie nach 6 Stunden Glühen bei 900 °C eine spezifische Oberfläche von wenigstens 30 m$^2$/g aufweist.

6. Zusammensetzung gemäß einem der vorhergehenden Ansprüche, dadurch gekennzeichnet, daß sie insgesamt der Formel $Ce_xZr_{1-x}O_2$ entspricht, in der x eine Zahl zwischen 0,5 und 1 ist, wobei dieser letzte Wert ausgeschlossen ist und x ganz besonders zwischen 0,5 und 0,9 liegen kann.

7. Zusammensetzung gemäß Anspruch 6, dadurch gekennzeichnet, daß x eine Zahl zwischen 0,5 und 0,8 ist.

8. Zusammensetzung gemäß einem der Ansprüche 6 oder 7, dadurch gekennzeichnet, daß x zwischen 0,5 und 0,7 liegt.

9. Zusammensetzung gemäß einem der vorhergehenden Ansprüche, dadurch gekennzeichnet, daß sie außerdem Yttrium in fester Lösung umfaßt.

10. Verfahren zur Herstellung einer Zusammensetzung, so wie in einem der Ansprüche 1 bis 9 definiert, gekennzeichnet durch die Tatsache, daß es die folgenden Schritte umfaßt:

(i) man stellt ein wäßriges Gemisch her, das lösliche Verbindungen von Cer und Zirkonium und gegebenenfalls Yttrium in Mengen erhält, die den stöchiometrischen Verhältnissen des gewünschten Produkts und dem Erhalt einer rein kubisch-kristallinen Phase aus Ceroxid entsprechen;

(ii) man führt dann eine Thermohydrolyse des wäßrigen Gemischs aus, indem man dieses auf eine Temperatur zwischen 80 °C und 350 °C erhitzt,

(iii) man gewinnt das so erhaltene Reaktionsprodukt,

(iv) man glüht (calciniert) das gewonnene Produkt bei einer Temperatur zwischen 200°C und 1000°C.

11. Verfahren gemäß Anspruch 10, dadurch gekennzeichnet, daß die lösliche Cerverbindung ausgewählt ist, allein oder im Gemisch, unter den Nitraten, insbesondere dem Cer(IV)-nitrat und den Cer-Ammoniak-Nitraten.

12. Verfahren gemäß Anspruch 10 oder 11, dadurch gekennzeichnet, daß man eine Cer(IV)-nitrat-Lösung verwendet, die aus der elektrolytischen Oxidation einer Cer(III)-nitrat-Lösung stammt.

13. Verfahren gemäß einem der Ansprüche 10 bis 12, dadurch gekennzeichnet, daß die lösliche Zirkoniumverbindung ausgewählt ist, allein oder im Gemisch, unter Zirkoniumsulfat, Zirkonylnitrat oder Zirkonylchlorid.

14. Verfahren gemäß einem der Ansprüche 10 bis 13, dadurch gekennzeichnet, daß man nach dem Schritt des Erhitzens eine Base in das Ausfällungsmedium hinzugibt.

15. Verfahren gemäß einem der Ansprüche 10 bis 14, dadurch gekennzeichnet, daß das gewonnene Reaktionsprodukt danach gewaschen wird, vorzugsweise mit einer Ammoniaklösung.

16. Verfahren gemäß einem der Ansprüche 10 bis 15, dadurch gekennzeichnet, daß das gewonnene und gegebenenfalls gewaschene Reaktionsprodukt getrocknet wird.

17. Zusammensetzungsvorstufe einer Zusammensetzung gemäß einem der Ansprüche 1 bis 9, dadurch gekennzeichnet, daß sie auf Cer und Zirkonium basiert, und dadurch, daß sie, nachdem sie einem Glühen bei einer Temperatur zwischen 400 °C und 800 °C unterworfen wurde, in Form einer rein kubisch-kristallinen Phase aus Ceroxid vorliegt, die das Zirkonium in das Kristallgitter des Ceroxids eingebaut enthält.

18. Zusammensetzungsvorstufe gemäß Anspruch 17, dadurch gekennzeichnet, daß sie, nachdem sie einem Glühen bei einer Temperatur zwischen 400 °C und 800 °C unterworfen wurde, insgesamt der Formel $Ce_xZr_{1-x}O_2$ entspricht, in der x eine Zahl zwischen 0,5 und 1 ist, wobei dieser letzte Wert ausgeschlossen ist und x ganz besonders zwischen 0,5 und 0,9 liegen kann.

19. Zusammensetzungsvorstufe gemäß Anspruch 18, dadurch gekennzeichnet, daß x zwischen 0,5 und 0,7 liegt.

20. Zusammensetzungsvorstufe gemäß einem der Ansprüche 17 bis 19, dadurch gekennzeichnet, daß sie Yttrium umfaßt, wobei das Yttrium nach dem Glühen bei einer Temperatur zwischen 400 °C und 800 °C in fester Lösung vorliegt.

21. Verfahren zur Herstellung einer Zusammensetzungsvorstufe gemäß einem der Ansprüche 17 bis 20, dadurch gekennzeichnet, daß es die folgenden Schritte umfaßt:

(i) man stellt ein wäßriges Gemisch her, das lösliche Verbindungen von Cer und Zirkonium und gegebenenfalls von Yttrium, in Mengen enthält, die den stöchiometrischen Verhältnissen des gewünschten Produkts und dem Erhalt einer rein kubisch-kristallinen Phase aus Ceroxid entsprechen;

(ii) man führt dann eine Thermohydrolyse des wäßrigen Gemischs aus, indem man dieses auf eine Temperatur zwischen 80 °C und 350 °C erhitzt,

(iii) man gewinnt das so erhaltene Reaktionsprodukt.

22. Verwendung einer Zusammensetzung, so wie in einem der Ansprüche 1 bis 9 oder 17 bis 20 definiert oder gemäß einem Verfahren, so wie in einem der Ansprüche 10 bis 16 oder 21 definiert, erhalten, zur Herstellung von Katalysatoren oder Katalysatorträgern, die insbesondere zur Behandlung von Abgasen aus Verbrennungsmotoren bestimmt sind.

23. Katalysator des Typs, der einen porösen Träger und katalytisch aktive Elemente umfaßt, dadurch gekennzeichnet, daß der poröse Träger Aluminiumoxid im Gemisch mit einer Verbindung, so wie bei einem der Ansprüche 1 bis 9 definiert oder gemäß dem Verfahren von einem der Ansprüche 10 bis 16 erhalten, umfaßt.

24. Katalysator vom Monolith-Typ, der eine feuerfeste Struktur (Träger) umfaßt, die mit einer porösen Schicht überzogen ist, auf der katalytisch aktive Elemente abgeschieden sind, dadurch gekennzeichnet, daß die poröse Schicht Aluminiumoxid im Gemisch mit einer Zusammensetzung, so wie in einem der Ansprüche 1 bis 9 definiert oder gemäß dem Verfahren von einem der Ansprüche 10 bis 16 erhalten, umfaßt.

FIG. 1

FIG. 2

FIG. 3

FIG. 4

FIG. 5

FIG. 6